# EUROPÄISCHE PATENTSCHRIFT

(11) **EP 0 915 997 B1**
(45) Veröffentlichungstag und Bekanntmachung des Hinweises auf die Patenterteilung: **27.03.2002**
(21) Anmeldenummer: 97938826.1
(22) Anmeldetag: 16.07.1997
(51) Int. Cl.: C25C 5/02

(54) **VERFAHREN ZUR HERSTELLUNG VON SOLVENS-STABILISIERTEN METALLKOLLOIDEN UND TRÄGERFIXIERTEN METALLCLUSTERN**
PROCESS FOR PREPARING SOLVENT-STABILISED METAL COLLOIDS AND SUBSTRATE-IMMOBILISED METAL CLUSTERS
PROCEDES DE PREPARATION DE COLLOIDES METALLIQUES STABILISES PAR DES SOLVANTS ET DE CLATHRATES METALLIQUES FIXES SUR DES SUBSTRATS

(30) Priorität: 30.07.1996 DE 19630581
(43) Veröffentlichungstag der Anmeldung: 19.05.1999
(73) Patentinhaber: Studiengesellschaft Kohle mbH, 45470 Mülheim an der Ruhr (DE)
(72) Erfinder: REETZ, Manfred, Theodor, D-45470 Mülheim an der Ruhr (DE); LOHMER, Gunther, D-45470 Mülheim an der Ruhr (DE)
(74) Vertreter: von Kreisler, Alek, Dipl.-Chem.
(86) Internationale Anmeldenummer: EP9703807
(87) Internationale Veröffentlichungsnummer: WO9804763

(56) Entgegenhaltungen:
- EP-A- 0 347 114
- EP-A- 0 672 765

## Beschreibung

Die vorliegende Erfindung betrifft ein überraschend einfaches Verfahren zur größenselektiven Herstellung von löslichen Metallkolloiden. Die Erfindung beinhaltet auch die Herstellung von bimetallischen Kolloiden. Nanostrukturierte Metallkolloide bzw. Cluster, insbesondere im Größenbereich von 1 bis 10 nm, sind bekanntlich nützliche Katalysatoren. Es ist ferner seit langem bekannt, daß die Reduktion von Übergangsmetallsalzen zu unlöslichen Metallpulvern führt, es sei denn, die Reduktion wird in Gegenwart von Stabilisatoren durchgeführt, die sich um die intermediär gebildeten nanometergroßen Metallcluster legen und diese vor unerwünschter Agglomeration schützen [G. Schmid, *Clusters and Colloids,* VCH, Weinheim, 1994; B. C. Gates, L. Guczi, H. Knözinger, Metal Clusters in Catalysis, Elsevier, Amsterdam, 1986]. Zu den bislang bekanntgewordenen Stabilisatoren gehören spezielle Liganden wie Triarylphosphane, Polymere wie Poly(vinylpyrollidone), Tenside wie langkettige Tetraalkylammoniumsalze (R₄N⁺X⁻) und in manchen Fällen spezielle Lösungsmittel. Die für die Reduktion der Metallsalze erforderlichen Reduktionsmittel schließen z. B. Wasserstoff, Hydrazin, Formaldehyd und diverse Borhydride ein [Lit.: s.o.]. Kürzlich wurden die ersten elektrochemischen Verfahren zur Herstellung von Tetraalkylammoniumsalz-stabilisierten Metallkolloiden und deren Trägerfixierung beschrieben [M. T. Reetz, W. Helbig, *J. Am. Chem. Soc*. **116** (1994) 7491; M. T. Reetz, S. A. Quaiser, *Angew. Chem*. **107** (1995) 2461, *Angew. Chem. Int. Ed. Engl*. **34** (1995) 2240]. Danach wird eine metallische Opferanode (z. B. ein Pd-Blech) als Metallquelle verwendet. In Gegenwart des Leitsalzes R₄N⁺X⁻ löst sich das Metallblech anodisch auf, wobei die dabei entstehenden Metallsalze zur Kathode wandern, wo sie wieder reduziert werden. Die Metallatome lagern sich zu nanostrukturierten Metallkolloiden zusammen, die von den Tetraalkylammoniumsalzen stabilisiert werden. Alternativ können im elektrochemischen Verfahren zwei inerte Elektroden verwendet werden, wobei ein Übergangsmetallsalz als Metallquelle dient, d. h. die Metallsalze werden direkt elektrochemisch in Gegenwart von R₄N⁺X⁻ reduziert. Ein wesentlicher Vorteil der Methode ist die Tatsache, daß die Größe der nanostrukturierten R₄N⁺X⁻-stabilisierten Cluster durch Einstellung der Stromdichte gezielt variiert werden kann. Dies ist deshalb wichtig, weil bekanntlich die Größe von Metall-Clustern deren katalytische Eigenschaften stark beeinflussen [G. Schmid, *Clusters and Colloids,* VCH, Weinheim, 1994]. Tatsächlich gilt die Steuerung der Clustergröße als größte Herausforderung auf diesem Gebiet [J. S. Bradley, in *Clusters and Colloids,* (Hrsg. G. Schmid), VCH, Weinheim, 1994, S. 490].

Nachteile der oben genannten Methoden sind u. a. 1) die hohen Kosten mancher Reduktionsmittel bzw. deren z. T. schwierige Handhabung wie im Falle von Wasserstoff, der eine Explosionsgefahr bzw. spezielle und kostspielige Handhabungsmethoden beinhaltet; 2) fehlende Größenselektivität; 3) aufwendige Abtrennung von Reduktionsmitteln oder von Nebenprodukten; 4) unsaubere Produkte durch partiellem Einbau der Reduktionsmittel (z. B. Wasserstoff oder Bor), und/oder 5) Verwendung von teueren Stabilisatoren wie Phosphane oder Tetraalkylammoniumsalze.

Neben der chemischen und elektrochemischen Reduktion von Übergangsmetallsalzen in Gegenwart von den oben erwähnten Stabilisatoren können manche Metallkolloide auch mit Hilfe der Metallverdampfung hergestellt werden [S. C. Davis, K. J. Klabunde, *Chem. Rev.* **82** (1982) 153; K. J. Klabunde, G. Cardenas-Trivino, in *Active Metals: Preparation, Characterization, Applications* (Hrsg. A. Fürstner), VCH, Weinheim, 1996, S. 237]. Danach wird ein Übergangsmetall verdampft und der Metalldampf in eine kalte Matrix bestehend aus einem Lösungsmittel gebracht. In einigen Fällen, insbesondere bei der Verwendung von polaren Lösungsmitteln wie Tetrahydrofuran oder Aceton konnten die bei tiefen Temperaturen erzeugten Metallkolloid-Lösungen auf Raumtemperatur gebracht werden, ohne daß dabei eine unerwünschte Agglomeration der nanostrukturierten Metallcluster eintritt. Es handelt sich dabei um Solvens-Stabilisierung. Einige der so dargestellten Solvens-stabilisierten Metallkolloide wurden als Katalysatoren bei Hydrierungen eingesetzt. Bei dieser Methode umgeht man also die oben erwähnten Nachteile. Allerdings handelt es sich bei der Metallverdampfung um eine teuere Methode, denn aufwendige Apparaturen mit einem hohen Energieaufwand sind erforderlich. Die Größenselektivität im präparativen Maßstab ist ebenfalls problematisch.

Verwendet man zur Reduktion von Pd-Salzen Wasserstoff in speziellen Lösungsmitteln wie Propylencarbonat, so z. B. bei der in situ Hydrierung von Fettsäuren, so sind Solvens-stabilisierte Pd-Cluster als Hydrierkatalysatoren involviert [A. Behr, H. Schmidke, *Chem. Ing. Tech*. **65** (1993) 568; A. Behr, N. Döring, S. Durowicz-Heil, B. Ellenberg, C. Kozik, C. Lohr, H. Schmidke, *Fett Wiss. Technol.* **95** (1993) 2]. Eine Größenselektivität ist jedoch nicht möglich.

Eine weitere Methode bezieht sich auf die einfache Thermolyse von bestimmten Übergangsmetallsalzen in Methylisobutylketon als Solvens und Stabilisator. Am Beispiel der Thermolyse von Pd-Salzen in diesem Medium konnte gezeigt werden, daß dieses Lösungsmittel Pd-Cluster stabilisiert Allerdings sind die Pd-Cluster relativ groß, d.h. größer als 8 nm, ferner ist eine Steuerung der Clustergröße, d. h. eine Größenselektivität nicht möglich [K. Esumi, T. Tano, K. Meguro, *Langmuir* **5** (1989) 268].

Es wurde nun gefunden, daß bestimmte Solvens-stabilisierte Metallkolloide mit Hilfe von elektrochemischen Methoden in Gegenwart von Lösungsmitteln, die zur Stabilisierung von Metallkolloiden befähigt sind, zugänglich sind und bei Raumtemperatur sowie bei noch höheren Temperaturen bequem gehandhabt werden können.

Die erfindungsgemäßen Metallkolloide benötigen keine Tenside oder Polymere zur Stabilisierung.

Was die elektrochemische Methode angeht, so sind zwei prinzipielle Varianten möglich. Als Metallquelle kann z.B. eine aus Metall bestehende Opferanode verwendet werden. Nach anodischer Auflösung werden die dabei freigesetzten Metallsalze an der Kathode wieder reduziert, wobei das Solvens als Stabilisator der Metallkolloide bzw. Metallcluster dient (Schema 1).

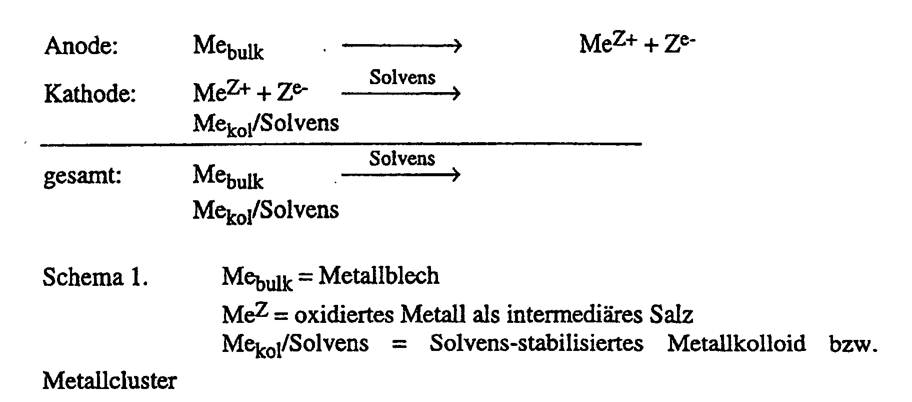

Alternativ ist es auch möglich, im Rahmen der elektrochemischen Herstellung von Solvens-stabilisierten Metallkolloiden Übergangsmetallsalze als Metallquelle einzusetzen. Dabei wird eine elektrochemische Apparatur bestehend aus zwei inerten Elektroden verwendet. Beide Varianten beinhalten die Verwendung von Lösungsmitteln, die zur Stabilisierung von Metallkolloiden bzw. Metallclustern befähigt sind, sowie ein geeignetes Leitsalz.

Im Falle von Metallblechen als Metallquelle verwendet man Übergangsmetalle wie Fe, Co, Ni, Pd, Cu, Ag oder Au. Werden Übergangsmetallsalze als Metallquelle verwendet, so eignen sich die unterschiedlichsten Salze von Übergangsmetallen, z. B. von Fe, Co, Ni, Pd, Pt, Rh, Ru, Mo, Cu, Ag oder Au. Als Lösungsmittel und zugleich als Stabilisator dienen polare Solventien wie organische Carbonate (z. B. Propylencarbonat), Carbonsäureamide (z. B. Dimethylacetamid), Schwefelsäureamide (z. B. SO₂(NBu₂)₂) oder Harnstoffderivate (z. B. Tetrabutylharnstoff). Vorzugsweise wird Propylencarbonat verwendet. Als Leitsalz können gängige anorganische Salze wie LiCl, NaCl, NaBr, NaClO₄, KCI oder KBr oder organische Salze wie (CH₃)₄N⁺X⁻ oder (C₂H₅)₄N⁺X⁻ (X = Cl, Br, I, OAc, ClO₄), die selbst zur Cluster-Stabilisierung ungeeignet sind, verwendet werden. Vorzugsweise dient NaCl oder (CH₃)₄N⁺X⁻ als Leitsalz. Die Temperatur in der Elektrolysezelle kann zwischen-50°C und +140°C liegen, vorzugsweise 25 - 70°C.

Was die Steuerung der Größe der so hergestellten Metall-Cluster angeht, so können Parameter wie Stromdichte variiert werden (je höher die Stromdichte, um so kleiner die Cluster), jedoch besteht die einfachste Methode in der Wahl des Leitsalzes. Während Salze wie NaCl oder KCl zu Clustergrößen im Bereich von 7 bis 10 nm führen, ergibt die Verwendung von Tetramethyl- oder Tetraethylammonium-Salzen Clustergrößen von 2 bis 5 nm.

Bei der elektrochemischen Herstellung von Solvens-stabilisierten bimetallischen Kolloiden bzw. Clustern sind zwei Metallquellen erforderlich, wobei drei Varianten möglich sind: 1) Verwendung von zwei Opferanoden; 2) Verwendung von einer Opferanode und einem Metallsalz; 3) Verwendung von zwei verschiedenen Metallsalzen.

Zur Charakterisierung der Metallkolloide werden die üblichen analytischen Methoden herangezogen, insbesondere die Transmissionselektronenmikroskopie (TEM). Die thermische Stabilität der kolloidalen Lösungen wird durch einfaches Erhitzen geprüft. Wird bei einer bestimmten Temperatur Metallpulverbildung beobachtet, so ist das Kolloid unter diesen Bedingungen instabil.

Die durch TEM-Untersuchungen ermittelte Größe der erfindungsgemäß hergestellten Kolloide bzw. Cluster bewegt sich in allen Fällen im Nanometerbereich, typischerweise zwischen 2 und 15 nm. Was die Größenverteilung der Metallcluster angeht, so sind sie überraschenderweise einheitlich. Was die thermische Stabilität angeht, so sind viele der erfindungsgemäß dargestellten kolloidalen Lösungen ungewöhnlich stabil. Typisch ist eine 0.1 M Propylencarbonat-Lösung von 8-10 nm-großen Pd-Clustern, die mindestens 3 Tage bei 160°C stabil ist bzw. kein Anzeichen von Pd-Pulverbildung zeigt. Dies steht im Gegensatz zu herkömmlich stabilisierten Metallclustern, wie z. B. R₄N⁺K⁻-stabilisierte Pd-Kolloide, die sich schon bei 130 - 140°C rasch zersetzen. Diese ungewöhnlich hohe thermische Stabilität der Solvens-stabilisierten Kolloide ist eine unerwartete Eigenschaft, die besonders bei der Anwendung in der Katalyse nützlich ist.

Was die Anwendung der kolloidalen Lösungen in der Katalyse angeht, so kommen recht unterschiedliche chemische Stoffumwandlungen in Frage, z. B. Hydrierungen, Oxidationen und C-C-Verknüpfungen wie Heck- oder Suzuki-Kupplungen.

Die hier beschriebenen Solvens-stabilisierten Metall- bzw. Bimetall-Cluster können auch Träger-fixiert werden. Dazu werden die kolloidalen Lösungen mit festen ggf. dotierten Trägern wie Metalloxide (z. B. SiO₂, Al₂O₃, oder TiO₂), Aktivkohle oder Polymere (z.B. Polyaramide) behandelt. Nach Rühren oder Schütteln solcher Gemische läßt man den festen Träger absetzen, filtriert oder dekantiert ab und trocknet den festen Stoff. Verwendet man pellets als Träger (z. B. Al₂O₃-pellets), so sind Schalenkatalysatoren leicht herstellbar.

Sowohl die kolloidalen Lösungen als auch die Träger-fixierten Formen der Metallcluster eignen sich als Katalysatoren für eine Vielzahl von unterschiedlichen Reaktionen, so z. B. Hydrierungen, Oxidationen und C-C-Verknüpfungen. Beispielsweise eignen sich Propylencarbonat-stabilisierte Pd-Cluster als Katalysatoren bei der Heck-Reaktion von Chloraromaten bei 130-160°C.

Die Vorteile bei der Darstellung und Anwendung der erfindungsgemäß hergestellten Solvens-stabilisierten Metallkolloid bzw. Metallcluster sind u. a.:
1. Einfaches Herstellungsverfahren.
2. Billige und umweltfreundliche Lösungsmittel bzw. Stabilisatoren.
3. Einfache Steuerung der Clustergröße.
4. Überraschend einheitliche Clustergrößen.
5. Überrraschend hohe thermische Stabilität der kolloidalen Lösungen, die es erlaubt, katalytische Prozesse wie z. B. Heck-Reaktionen von wenig reaktiven Chloraromaten bei höheren Temperaturen durchzuführen.
6. Einfache Trägerfixierung der präformierten Cluster, insbesondere bei der Herstellung von Schalenkatalysatoren.

### Beispiel 1: Darstellung Propylencarbonat-stabilisiertes Palladiumkolloid

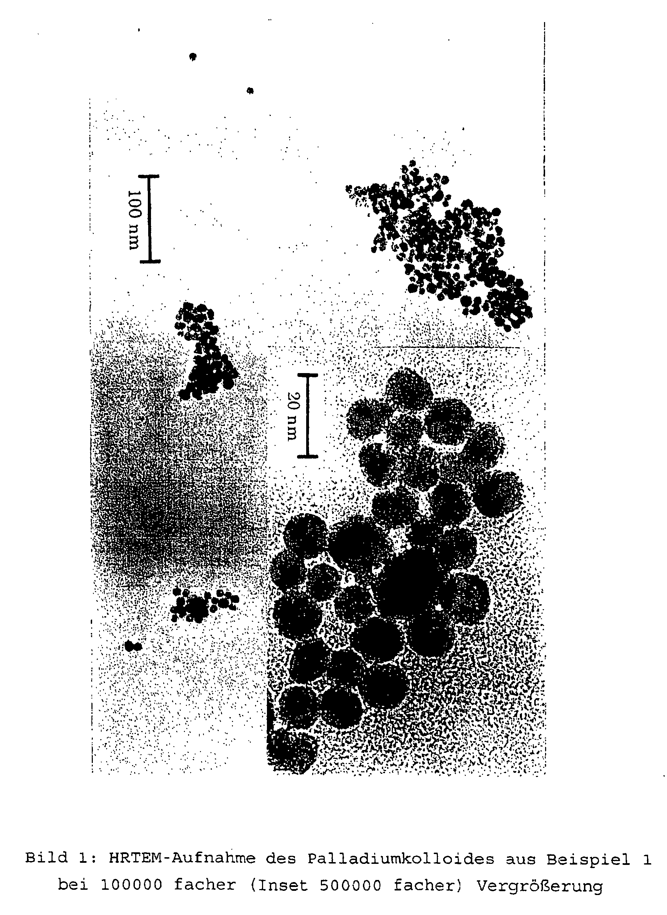

Unter Argon werden 50 ml Propylencarbonat, 5 ml Ethanol und 1 g NaCl zwischen einer Palladium-Anode und einer Platin-Kathode elektrolysiert. Die Reaktion wird in einem Ultraschallbad, das auf eine Temperatur von 70 °C thermostatisiert ist, durchgeführt. Die Elektrolyse verläuft galvanostatisch bei einer Stromdichte von 3 mA/cm². Nach einer geflossenen Strommenge von 200,2 mAh ist die Synthese beendet und die tiefbraune, kolloidale Lösung wird über eine Glasfilterfritte filtriert. Das so erhaltene Produkt enthält in enger Größenverteilung Palladium-Partikel zwischen 8 nm und 10 nm (Bild 1).

### Beispiel 2: Darstellung Propylencarbonat-stabilisiertes Palladiumkolloid

Unter Argon werden 50 ml Propylencarbonat und 200 mg Tetramethylammoniumbromid zwischen einer Palladium-Anode und einer Platin-Kathode elektrolysiert. Die Reaktion wird in einem Ultraschallbad, das auf eine Temperatur von 25 °C thermostatisiert ist, durchgeführt. Die Elektrolyse verläuft galvanostatisch bei einer Stromdichte von 3 mA/cm². Nach einer geflossenen Strommenge von 859,8 mAh (Anodengewichtsverlust 1.1 g) ist die Synthese beendet und die tiefbraune, kolloidale Lösung wird über eine Glasfilterfritte filtriert. Das so erhaltene Produkt enthält Palladium-Partikel zwischen 4 und 6 nm. Durch Zugaben von Diethylether kann das Kolloid als leicht schmierender Feststoff, der sich in Propylencarbonat redispergieren läßt, gewonnen werden.

### Beispiel 3: Darstellung Propylencarbonat-stabilisiertes Platinkolloid

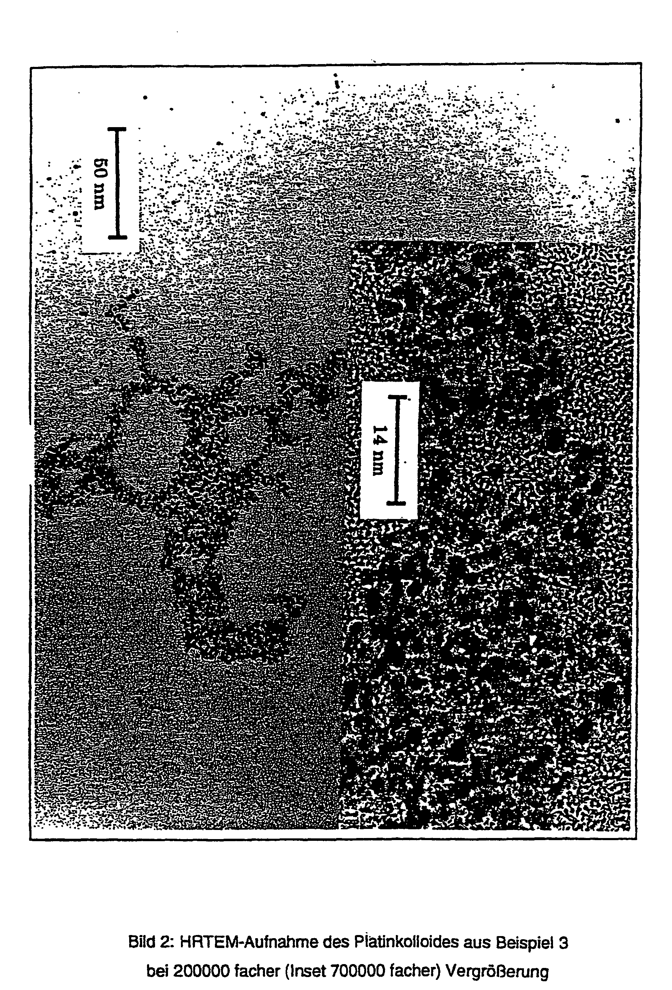

Unter Argon werden 50 ml Propylencarbonat, 200 mg Platindichlorid und 235 mg Tetramethylammoniumacetat zwischen zwei Platin-Elektroden elektrolysiert. Die Reaktion wird in einem Ultraschallbad, das auf eine Temperatur von 25 °C thermostatisiert ist, durchgeführt. Die Elektrolyse verläuft galvanostatisch bei einer Stromdichte von 3 mA/cm². Nach einer geflossenen Strommenge von 343,6 mAh ist die Synthese beendet und die tiefbraune, kolloidale Lösung wird über eine Glasfilterfritte filtriert. Das so erhaltene Produkt enthält in enger Größenverteilung Platin-Partikel zwischen 2 und 3 nm.(Bild 2) Durch Zugaben von Diethylether kann das Kolloid als leicht schmierender Feststoff, der sich in Propylencarbonat redispergieren läßt, gewonnen werden.

### Beispiel 4: Darstellung Propylencarbonat-stabilisiertes Rhodiumkolloid

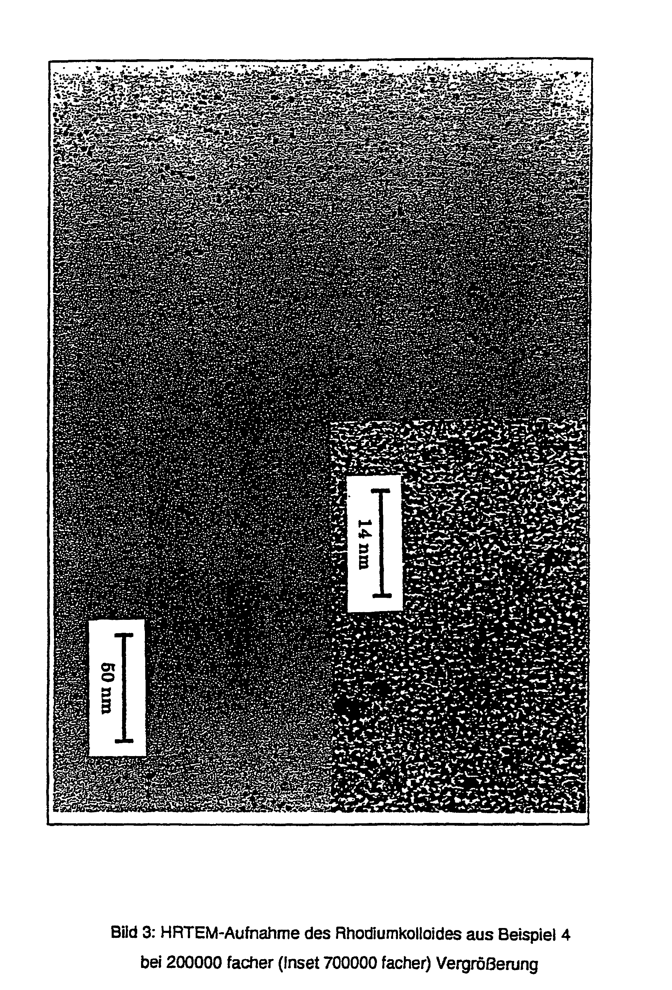

Unter Argon werden 50ml Propylencarbonat, 200 mg Rhodiumtrichlorid und 275 mg Tetramethylammoniumacetat zwischen zwei Platin-Elektroden elektrolysiert. Die Reaktion wird in einem Ultraschallbad, das auf eine Temperatur von 25 °C thermostatisiert ist, durchgeführt. Die Elektrolyse verläuft galvanostatisch bei einer Stromdichte von 3 mA/cm². Nach einer geflossenen Strommenge von 1277,7 mAh ist die Synthese beendet und die tiefbraune, kolloidale Lösung wird über eine Glasfilterfritte filtriert. Das so erhaltene Produkt enthält in enger Größenverteilung Rhodium-Partikel zwischen 2 und 4 nm (Bild 3). Durch Zugaben von Diethylether kann das Kolloid als leicht schmierender Feststoff, der sich in Propylencarbonat redispergieren läßt, gewonnen werden.

### Beispiel 5: Thermische Stabilität

Die thermische Stabilität von Propylencarbonat-stabilisierten Palladium-Kolloiden relativ zu der von R₄N⁺X⁻ Palladium-Kolloiden läßt sich wie folgt ermitteln. Ein entsprechend den obigen Beispielen gewonnenes Propylencarbonat-stabilisiertes Palladiumkolloid (Größe 8-10 nm) wird drei Tage auf 150-160 °C erhitzt. Es tritt weder Ausfällung von Palladiumpulver noch eine optische Veränderung auf. Wird hingegen eine Tetrahydrofüran-Lösung von Tetraoctylammoniumbromidstabilisieten Palladium-Clustern (Größe 7-9 nm) im geschlossenen Gefäß drei Stunden auf 130-140 °C erhitzt, so bilden sich große Mengen von unlöslichem Palladiumpulver.

## Patentansprüche

1. Größenselektives elektrochemisches Verfahren zur Herstellung von Solvens-stabilisierten Übergangsmetallkolloiden, die ausschließlich durch Lösungsmittel stabilisiert sind, mit Teilchengrößen von 1 - 15 nm, **dadurch gekennzeichnet, daß** Übergangsmetallsalze in Gegenwart von polaren, stabilisierenden Lösungsmitteln elektrochemisch zu Metallkolloiden oder Bimetallkolloiden reduziert werden.

2. Verfahren nach Anspruch 1, wobei die Übergangsmetallsalze durch elektrochemische Auflösung einer Metallopferanode erzeugt werden.

3. Verfahren nach Anspruch 1, wobei zwei verschiedene Metallsalze an der Kathode reduziert werden und Bimetallkolloide entstehen.

4. Verfahren nach Anspruch 3, wobei eines der beiden Metallsalze durch Auflösung einer Metallopferanode erzeugt wird.

5. Verfahren nach Ansprüchen 1-4, wobei durch Einsatz unterschiedlicher Leitsalze unterschiedliche Teilchengrößenverteilungen erzeugt werden.

6. Verfahren gemäß Ansprüchen 1-5, **dadurch gekennzeichnet, daß** Metalle der Gruppen IIIb, IVb, Vb, VIIb, VIII, Ib, IIb, IIIa, IVa oder Va des Periodensystems verwendet werden.

7. Verfahren gemäß Ansprüchen 1-6, **dadurch gekennzeichnet, daß** als polare Lösungsmittel bei der Metallkolloid-Herstellung als Kolloidstabilisator organische Carbonate und Harnstoffderivate dienen.

## Claims

1. A size-selective electrochemical process for the preparation of solvent-stabilized transition metal colloids which are exclusively stabilized by solvents and have particle sizes of from 1 to 15 nm, **characterized in that** transition metal salts are reduced electrochemically in the presence of polar stabilizing solvents to form metal colloids or bimetallic colloids.

2. The process according to claim 1, wherein said transition metal salts are generated by the electrochemical dissolution of a metal sacrificial anode.

3. The process according to claim 1, wherein two different metal salts are reduced at the cathode to form bimetallic colloids.

4. The process according to claim 3, wherein one of the two metal salts is generated by dissolution of a metal sacrificial anode.

5. The process according to claims 1 to 4, wherein different particle size distributions are obtained by using different conducting salts.

6. The process according to claims 1 to 5, **characterized by** using metals of groups IIIb, IVb, Vb, VIIb, VIII, Ib, IIb, IIIa, IVa or Va of the Periodic Table.

7. The process according to claims 1 to 6, **characterized in that** organic carbonates and urea derivatives are used as the polar solvent serving as a colloid stabilizer in the preparation of the metal colloid.

## Revendications

1. Procédé électrochimique sélectif de taille pour préparer des colloïdes de métaux de transition stabilisés par un solvant, qui sont stabilisés exclusivement par des solvants et ont une granulométrie de 1 à 15 nm, **caractérisé en ce que** des sels de métaux de transition sont, en présence de solvants polaires stabilisants, réduits par voie électrochimique en colloïdes métalliques et colloïdes bimétalliques.

2. Procédé selon la revendication 1, dans lequel les sels de métaux de transition sont produits par attaque électrochimique d'une anode réactive métallique.

3. Procédé selon la revendication 1, dans lequel deux sels métalliques différents sont réduits à la cathode, et il se forme des colloïdes bimétalliques.

4. Procédé selon la revendication 3, dans lequel l'un des deux sels bimétalliques est produit par attaque d'une anode réactive métallique.

5. Procédé selon les revendications 1 à 4, dans lequel on produit, par utilisation de différents sels conducteurs, différentes distributions granulométriques.

6. Procédé selon les revendications 1 à 5, **caractérisé en ce que** l'on utilise des métaux des groupes IIIb, IVb, Vb, VIIb, VIII, Ib, IIb, IIIa, IVa ou Va du Tableau Périodique.

7. Procédé selon les revendications 1 à 6, **caractérisé en ce que** l'on utilise des carbonates organiques et des dérivés de l'urée en tant que solvants polaires servant de stabilisants de colloïdes lors de la préparation des colloïdes métalliques.
